# EUROPÄISCHE PATENTSCHRIFT

(11) **EP 0 607 950 B1**
(45) Veröffentlichungstag und Bekanntmachung des Hinweises auf die Patenterteilung: **25.11.1998**
(21) Anmeldenummer: 94100743.7
(22) Anmeldetag: 19.01.1994
(51) Int. Cl.: G07F 7/08

(54) **Verfahren und Datenträgeranordnung zur Echtheitserkennung von Speicherchips**
Method and data carrier for checking the authenticity of chip memories
Procédé et support de données pour la vérification de l'authenticité des mémoires des puces

(30) Priorität: 19.01.1993 DE 4301259
(43) Veröffentlichungstag der Anmeldung: 27.07.1994
(73) Patentinhaber: SIEMENS AKTIENGESELLSCHAFT, 80333 München (DE)
(72) Erfinder: Schrenk, Hartmut, Dr.rer.nat., D-85540 Haar (DE)

(56) Entgegenhaltungen:
- EP-A- 0 061 373
- EP-A- 0 215 187
- EP-A- 0 257 596
- EP-A- 0 387 046
- WO-A-89/10599
- WO-A-89/12287
- DE-A- 4 230 866
- FR-A- 2 685 520
- US-A- 5 012 076

## Beschreibung

Die Erfindung betrifft ein Verfahren nach dem Oberbegriff des Patentanspruchs 1 sowie eine Datenträgeranordnung nach dem Oberbegriff des Patentanspruchs 13 zur Durchführung des Verfahrens.

Zur bargeldlosen Bezahlung von Waren oder zum Abrechnen von Dienstleistungen und ähnlichem sind datengesteuerte Zahlungssysteme in Form von Datenaustauschsystemen bekannt, die beispielsweise in der EP-0 321 728 A2 beschrieben worden sind.

Zur Echtheitserkennung von Speicherchips, insbesondere bei Verwendung in tragbaren Datenträgeranordnungen von Datenaustauschsystemen, kann zwischen Datenaustausch- und Kontrollbetrieb umgeschaltet werden, wobei insbesondere die Signallaufzeit der Kontrolldaten als Erkennungsmerkmal dient. Gemäß diesem Stand der Technik ist als Erkennungsmerkmal eines autorisierten Kartenchips ein analog realisierter Datenverarbeitungs-Schaltungsteil notwendig, dessen kurze Reaktionszeit über eine programmgesteuerte Simulationsschaltung schwer nachvollziehbar ist. Auch eine Hardwaresimulation ist durch ein derartiges Echtheitsmerkmal erheblich erschwert, kann aber beim heutigen Stand der Technik nicht ausgeschlossen werden.

Es sind mittlerweile eine Vielzahl von Datenträgeranordnungen bekannt, die eine begrenzte Anzahl von Werteinheiten enthalten, welche sich beim Gebrauch dieser Chipkarten ständig verringern bis ein Minimalwert erreicht ist, - im allgemeinen der Wert 0 - bei dem die Chipkarte nicht mehr brauchbar ist. Solche Chipkarten finden beispielsweise als Telefonkarten heute vielerorts Verwendung. Auf diesen Telefonkarten befindet sich eine beschränkte Anzahl von Werteinheiten, beispielsweise für 12 DM oder 60 DM. Telefoniert der Chipkartenbenutzer mit einer solchen Chipkarte, so verringert sich die zur Verfügung stehende Anzahl von Werteinheiten, abhängig davon, wie oft und wie lange der Chipkartenbenutzer telefoniert.

Chipkarten zum Registrieren von Werteinheiten repräsentieren also einen Geldwert, der zu Mißbrauchsversuchen und Fälschungen führen kann. So kann es vorkommen, daß über ein geeignetes Programm mit einem Rechner oder durch Erstellung einer Platine mittels verfügbarer elektronischer Bauelemente solche Karten nachgebildet werden.

Es ist daher notwendig, solche tragbaren Datenträgeranordnungen, insbesondere Chipkarten, einer Echtheitsprüfung zu unterziehen, bevor die Karte benutzt werden kann. Ist die Chipkarte als echt erkannt, so ist mit ihr ein weiterer Datenaustausch möglich. Wird die "Chipkarte" dagegen als falsch erkannt, so führt dies zum Abbruch eines weiteren Datenaustausches. Echtheitsprüfungen von solchen Chipkarten werden normalerweise mit einem sogenannten Challenge- und Response-Verfahren durchgeführt. Die Karte weist dabei ihre Echtheit durch charakteristische Veränderung einer von einer Datenein-/ausgabeeinrichtung gesendeten Kontrolldatensendung ("Challenge") zur Datenträgeranordnung nach, die von der tragbaren Datenträgeranordnung - hier also der Chipkarte - als Kontrolldatensendung ("Response") wieder an die Datenein-/ausgabeeinrichtung zurückgesandt wird. Hierbei gibt es grundsätzlich zwei unterschiedliche Vorgehensweisen:

### (a) In der Karte ist ein geheimer Datenschlüssel gespeichert.

Die Abhängigkeit der Datensendung ("Response") von geheimen, kartenspezifischen Schlüsseln schützt das System kryptologisch gegen Nachbildungen. Durch eine in der Datenein-/ausgabeeinrichtung vorgesehene Schlüsselverwaltung und Geheimhaltung des Schlüssels kann hoher Schutz gegen Nachbildung der Chipkarte erreicht werden. Dies führt jedoch entweder zu speziell notwendigen Sicherheitsmodulen in der Datenein-/ausgabevorrichtung oder Sicherheitsmodule zu hohen Leitungskosten bei einer On-Line-Prüfung und damit zu hohen Systemkosten.

### (b) In der Karte ist kein Schlüsselgeheimnis gespeichert.

Solche Verfahren, in denen die Echtheit einer Chipkarte nur durch eine Fähigkeit komplexer Signalverarbeitung nachgewiesen wird, müssen sich gegen eventuelle Nachbildungen dadurch schützen, daß einmal
- die Prozedur zur Erzeugung der Datensendung ("Response") von der tragbaren Datenträgeranordnung zur Datenein/ausgabeeinrichtung geheimgehalten werden kann, und daß außerdem
- die Nachbildung von Prozedur und Rechenwerk mit standardmäßigen elektronischen Bauelementen zumindest Schwierigkeiten macht.

Gegen eine Nachbildung der Karte durch ein Rechenprogramm schützt in vielen Fällen ein Rechenwerk mit ausreichender Rechenleistung, welches von einem Rechner in einer vorgegebenen Zeit nicht oder nur von aufwendigen Systemen erbracht werden kann. Gegen eine Nachbildung mittels hardwaremäßig programmierbarer logischer Funktionen (Gatearray, PLA etc.) auf einer Schaltungsplatine ist dagegen dieses Echtheitsmerkmal weniger gesichert, wenn auch die Aufwendungen hoch sind. Eine volle Schutzwirkung gegen unerlaubte Nachbildung ist nämlich erst erreichbar, wenn es tatsächlich gelingt, den Algorithmus des Rechenvorgangs selbst geheim zu halten und gegen Analyseversuche zu schützen.

Das größte Risiko einer mißbräuchlichen Analyse von logischen Chipfunktionen auf einer Datenträgeranordnung besteht von der Methodik und vom Aufwand her gesehen darin, daß durch mehrmaliges Ausprobieren von Dateneingaben in die integrierte Schaltung der Datenträgeranordnung und Prüfung der daraufhin ausgegebenen Datensendungen ("Response") die geheimzuhaltende Funktionsweise der Chiplogik herausgefunden werden kann.

Eine Möglichkeit, dies nur in begrenzten Bereichen zuzulassen, besteht darin, daß in die integrierte Schaltungsanordnung der tragbaren Datenträgeranordnung, also in das Kartenchip, ein Fehlerzähler eingebaut wird, und nach Erfassen einer bestimmten Anzahl von Fehlern eine Datensendung von der Trägeranordnung unterbunden wird. Der Einbau eines solchen Fehlerzählers in die Datentrhgeranordnung setzt voraus, daß dieser Zähler auch manipuliersicher zurückgesetzt werden kann. Diese Möglichkeit ist in einfachen Chips ohne Kryptologie nicht gegeben.

Der Erfindung liegt daher die Aufgabe zugrunde, ein Verfahren und eine Datenträgeranordnung zur Durchführung dieses Verfahrens anzugeben, das einen wirksamen Schutz vor mehrmaligen Mißbräuchen bietet und in einfacher Weise zu realisieren ist.

Diese Aufgabe wird für ein Verfahren durch die Merkmale des Anspruches 1 und für eine Datenträgeranordnung zur Durchführung dieses Verfahrens durch die Merkmale des Anspruches 13 gelöst.

Weiterbildungen und zweckmäßige Ausführungen der Erfindung sind Gegenstand der auf diese Ansprüche zurückbezogenen Unteransprüche.

Die Erfindung wird im folgenden anhand von drei Figuren näher erläutert. Es zeigen:
- FIG 1: ein Blockschaltbild einer erfindungsgemaßen Datenträgeranordnung mit einer Datenein-/ausgabeeinrichtung,
- FIG 2: eine Blockdarstellung des zeitlichen Ablaufs einer erfindungsgemaßen Echtheitsprüfung, und
- FIG 3: ein Ablaufdiagramm des erfindungsgemaßen Verfahrens.

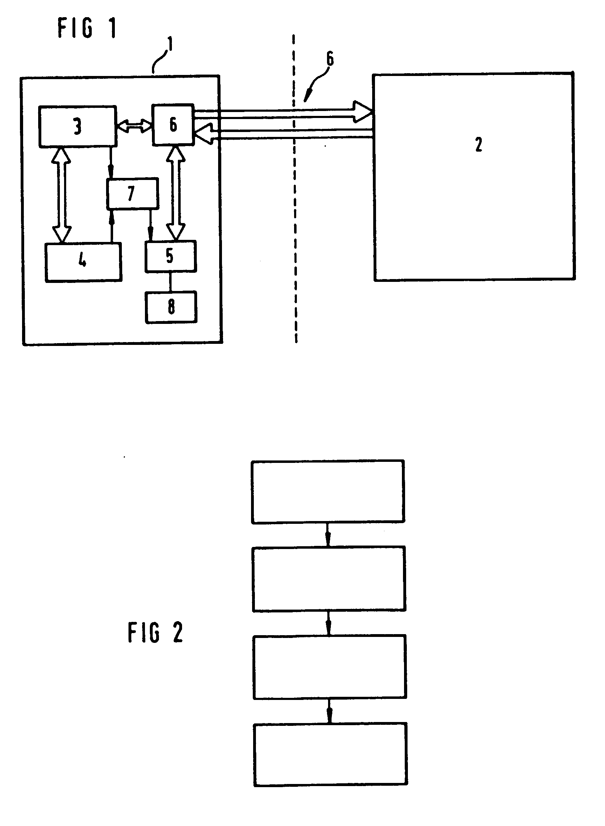

In FIG 1 ist das Blockschaltbild einer erfindungsgemäßen Datenträgeranordnung zusammen mit einer Datenein-/ausgabeeinrichtung dargestellt. Mit dem Bezugszeichen 1 ist in diesem Ausführungsbeispiel eine tragbare Datenträgeranordnung, beispielsweise eine Telefonchipkarte, bezeichnet, auf der Zähllogik 3, die mit einem nichtflüchtigen Speicher 4 (ein EPROM oder E²PROM-Speicher) verbunden ist. Die Zähllogik stellt in Verbindung mit dem nichtflüchtigen Speicher 4 sicher, daß die Anzahl der Zähleinheiten auf einen vorgegebenen Wert begrenzt ist. Die Zähllogik 3 sowie deren Daten, Steuer- und Adressierleitungen sind als integrierte Schaltungsanordnung auf der Karte in geeigneter Weise untergebracht. Der nichtflüchige Speicher 4 enthält erfindungsgemäß zumindest einen Teilbereich zum Speichern einer aktuellen Anzahl von Werteinheiten der Datenträgeranordnung. Ist die tragbare Datenträgeranordnung 1 z. B. eine Telefonchipkarte mit einem Wert von 60 DM, so können im nichtflüchtigen Speicher z. B. 6000 Werteinheiten zu je einem Pfennig abgespeichert werden. Mit jedem Telefoniervorgang vermindert sich erfindungsgemäß bei Verwendung dieser Telefonchipkarte die Anzahl der noch zur Verfügung stehenden Werteinheiten im nichtflüchtigen Speicher. Es ist dabei anzumerken, daß der nichtflüchtige Speicher 4 vorteilhafterweise nicht rücksetzbar ausgebildet ist.

Die tragbare Datenträgeranordnung 1 steht über eine Datenaustauschverbindung 6 mit der Datenein-/ausgabeeinrichtung 2 bei Benutzung der Datenträgeranordnung 1 in Verbindung. Im Falle von Telefonchipkarten wird diese Verbindung hergestellt, sobald diese Telefonchipkarte in einen die Datenein-/ausgabeeinrichtung 2 enthaltenen Telefonapparat eingeführt wird.

Um zu gewährleisten, daß nur mit einer "echten", d. h. nicht manipulierten oder nachgebildeten Datenträgeranordnung 1 ein Datenaustausch zur Datenein-/ausgabeeinrichtung 2 erfolgt, werden nach einem ersten Entwertungsvorgang über einen Datenaustausch zwischen der Datenträgeranordnung 1 und der Datenein-/ausgabeeinrichtung 2 Kontrolldaten zur Echtheitserkennung aus der Datenträgeranordnung 1 ausgesendet bzw. in diese eingeschrieben.

Die vom Datenträger als Echtheitsmerkmal ausgegebenen Daten werden über ein Rechenwerk 5 erzeugt. Über eine Koppelstufe 7 wird sichergestellt, daß die gesamte Prozedur zur Echtheitsprüfung nur beginnt, nachdem eine Entwertung stattgefunden hat.

FIG 2 zeigt als Blockschaltbild die zeitliche Reihenfolge der zu einer erfindungsgemaßen Echtheitsprüfung erforderlichen Schritte. Folgende Schritte werden erfindungsgemäß nacheinander ausgeführt: ein Entwertervorgang, Eingabe von Wertedaten und einer "Challenge" in das Rechenwerk, Datendurchmischung im Rechenwerk und Ausgabe einer "Response".

In einer erfindungsgemaßen Ausbildung weist das Rechenwerk 5 eine rückgekoppelte Schieberegistereinrichtung auf, die zu Beginn eines Rechenvorganges mit Daten aus dem nichtflüchtigen Speicher 4 einschließlich des vorher geänderten Werteinheitenspeichers und mit weiteren Daten geladen wird, die von der Datenein-/ausgabevorrichtung als "Challenge" gesendet werden. Nach einer Phase der Datendurchmischung im Rechenwerk 5 wird das Ergebnis der Datendurchmischung als "Response" an die Datenein-/ausgabevorrichtung zurückgeschickt und dort auf ihre Echtheit überprüft.

In einer Weiterbildung der Erfindung wird die Response über ein nichtlineares Auskoppelnetzwerk in der Weise gegenüber den Eingabedaten ins Rechenwerk 5 geändert, daß der Zusammenhang zwischen Ein- und Ausgabe noch schwerer zu erkennen ist.

Dieses Rechenwerk 5 wird vorzugsweise als integrierte Schaltung ausgeführt und über eine Fotomaskenanordnung so verschaltet, daß die elektrischen Leitungsverbindungen optisch nicht sichtbar sind, indem diese durch Dotierungsprozesse hergestellt werden. Versieht man diese integrierte Schaltung mit zusätzlichen Schaltungselementen, die für die eigentliche Realisierung der Elektronik in der erfindungsgemaßen Datenträgeranordnung an sich nicht notwendig sind, so wird eine Schaltungsanalyse durch Unbefugte weiter erschwert. Es besteht ebenfalls die Möglichkeit, das erwähnte digitale Rechenwerk in der integrierten Schaltung mit Schichten aus Metall- und/Silizium zu schützen, um eine optische Analyse und eine Messung elektrischer Potentiale zu erschweren.

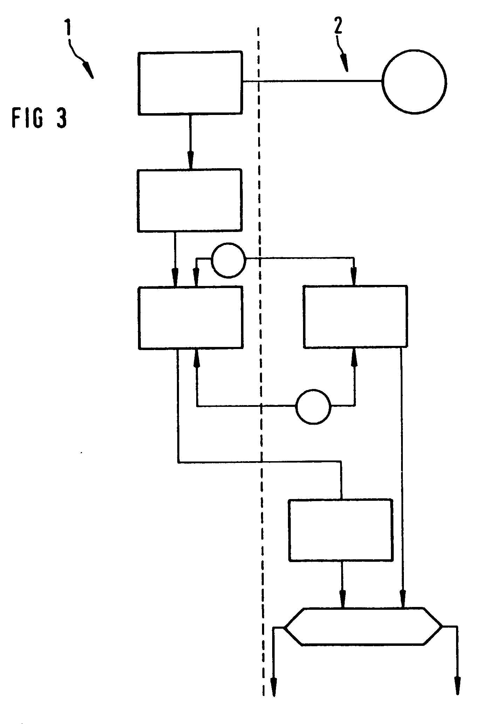

Das erfindungsgemäße Verfahren zur Echtheitserkennung einer derartigen Datenträgeranordnung 1 wird anhand einer Betrachtung von FIG 3 deutlich. FIG 3 zeigt einen prinzipiellen Ablauf des erfindungsgemäßen Verfahrens zur Echtheitserkennung der in FIG 1 dargestellten Datenträgeranordnung 1.

Das erfindungsgemäße Verfahren sieht vor, daß zur Echtheitserkennung einer mit einer begrenzten Anzahl von Werteinheiten ausgestatteten Datenträgeranordnung ein Datenaustausch zwischen der Datenein-/ausgabeeinrichtung erst freigegeben wird, nachdem die Anzahl von Werteinheiten in der Datenträgeranordnung verringert worden ist.

Geht man beispielsweise von einer Telefonkarte im Wert von 60 DM aus, so befinden sich 6000 Werteinheiten zu je 1 Pf auf einer noch unverbrauchten Telefonkarte. Mit jeder Abbuchung wird diese Anzahl von Werteinheiten vermindert, beispielsweise um eine Einheit. Damit sind lediglich 6000 Versuche möglich, um Informationen für eine Nachbildung der Datenträgeranordnung zu erhalten. Erfindungsgemäß kann jedoch auch vorgesehen werden, daß mit jedem Datenlesen bzw. Datenschreiben zur Echtheitserkennung mehr als eine Werteinheit verbraucht wird. Dies kann beispielsweise derart erfolgen, daß für jeden Versuch bereits 8,10 oder eine andere Anzahl von Werteinheiten entwertet wird. Hierdurch reduziert sich die mögliche Anzahl der oben erwähnten Versuche zur Nachbildung der Datenträgeranordnung. Realisiert wird dies dadurch, daß nur nach einem Einschreiben von Kontrolldaten in einen vorgegebenen Teilbereich des nichtflüchtigen Speichers eine Datensendung ("Response") von der tragbaren Datenträgeranordnung zur Datenein-/ausgabeeinheit 2 erfolgt.

In einer bevorzugten Weiterbildung des erfindungsgemaßen Verfahrens ist es vorgesehen, daß die aktuelle Anzahl der noch nicht verbrauchten Werteinheiten als Maßgabe zur Erzeugung einer Datensendung ("Response") von der Datenträgeranordnung 1 zur Datenein-/ausgabeeinrichtung 2 dient. Durch eine derartige Maßnahme ändert sich der Informationsinhalt der Datensendung von der Datenträgeranordnung 1 zur Datenein-/ausgabeeinrichtung 2 mit jedem Versuch, da gleichzeitig sich die Anzahl der noch nicht verbrauchten Wert einheiten erfindungsgemäß verringert. Damit ist es einem unbefugten Nachahmer erschwert, Rückschlüsse auf die Prozedur zur "Erzeugung" der Datensendung zu ziehen. Zweckmäßigerweise wird hierzu der Informationsinhalt der Datensendung ("Response") von der Datenträgeranordnung 1 zur Datenein-/ausgabeeinrichtung 2 mit der Ändung der aktuellen Anzahl der Werteinheiten ebenfalls geändert. Eine elektrische Analyse der Echtheitsmerkmale wird dadurch erschwert. Das in der Datenträgeranordnung vorgesehene digitale Rechenwerk erzeugt nämlich somit für einen externen Betrachter die Datensendung ("Response") auf nicht vorhersehbare, scheinbar zufällige Weise. Damit sind Rückschlüsse auf die Wirkungsweise des Rechenwerks erschwert, was gewollt ist.

Durch das erfindungsgemäße Verfahren ist gewährleistet, daß im Falle von systematischen Analyseversuchen durch Ausprobieren fortlaufend Werteinheiten verbraucht werden. Die Anzahl möglicher Analyseversuche an beispielsweise gekauften Telefonchipkarten ist damit auch ohne Vorsehen eines Fehlerzählers nur eingeschränkt möglich. Darüber hinaus ist sichergestellt, daß - sofern der jeweilige Restwert der Telefonchipkarte als Maßgabe zur Erzeugung einer Datensendung ("Response") verwendet wird - , sich der Informationsinhalt der Datensendung von Versuch zu Versuch ändert, auch wenn eine Datensendung von der Datenein-/ausgabeeinrichtung zur Datenträgeranordnung unverändert eingegeben wird. Eine Rückrechnung der internen Chiplogik durch Vergleich von Datenein- und-ausgaben ist daher erschwert.

Verbessert wird dieses Datenaustauschsystem noch dadurch, daß die Datenein-/ausgabeeinrichtung 2 ihre Kontrolldaten ("Challenge") ebenfalls auf zufällige Art und Weise erzeugt.

Weiter verbessert kann das erfindungsgemäße Verfahren dadurch werden, daß eine Datensendung ("Response") der Datenträgeranordnung zur Datenein-/ausgabeeinheit nur dann beginnt, nachdem die Datenein-/ausgabeeinrichtung eine vorgegebene Anzahl von Taktimpulsen zur tragbaren Datenträgeranordnung gesendet hat. Es ist auch möglich, daß diese Datensendung auf eine vorgegebene Anzahl von Takten der Datenein-/ausgabeeinrichtung begrenzt wird. Im übrigen kann diese Datensendung erst nach Ablauf einer vorgegebenen Anzahl von Takten gesendet werden, wobei diese Anzahl von Takten von der Datenein-/ausgabeeinheit beeinflußbar ist.

Eine systematische Datendurchmischung der Kontrolldaten mit für die eigentliche Echtheitserkennung unnötigen Daten, erschwert ein Erkennen der zur eigentlichen Echtheitserkennung notwendigen Kontrolldaten. Eine Vortäuschung solcher zusätzlicher, aber an und für sich nicht notwendiger Daten macht eine elektrische Analyse noch undurchsichtiger. Diese zusätzlichen Daten können beispielsweise vom Inhalt des nicht flüchtigen Speichers und/oder vom Zustand des digitalen Rechenwerkes abhängen.

Im übrigen kann auch erst nach einem Löschen eines vorgegebenen Teilbereiches des nichtflüchtigen Speichers zum Speichern der Anzahl von Werteinheiten eine Datensendung ("Response") von der tragbaren Datenträgeranordnung zur Datenein-/ausgabeeinheit erfolgen.

Im übrigen ist es auch möglich, daß in der Datenein-/ausgabeeinrichtung vorgesehen sind, Vergleichswerte zur Information der von der Datenträgeranordnung gesendeten Datensendung ("Response") zu berechnen und daß durch diese Mittel eine langsamere Berechnung in der tragbaren Datenträgeranordnung ermöglicht ist. Um eine eventuelle Nachbildung einer Chipkarte erkennen zu können, muß die Übertragung der "Response" zur Datenein-/ausgabevorrichtung bereits bei Fertigstellung der "Response" stattfinden. Die "Response" wird dann in der Datenein-/ausgabevorrichtung bis zum Datenvergleich zwischengespeichert. Um als echt zu erscheinen, müßte eine Fälschung also ebenso schnell rechnen können wie eine echte Karte.

In FIG 3 ist links mit dem Bezugszeichen 1 die Datenträgeranordnung und rechts mit dem Bezugszeichen 2 die Datenein-/ausgabeeinrichtung bezeichnet. Nachdem eine Datenverbindung zwischen Datenträgeranordnung 1 und Datenein-/ausgabeeinrichtung 2 hergestellt ist, beginnt in einem Schritt "Start" das Verfahren zur Echtheitserkennung der Datenträgeranordnung 1 mit einer Abbuchung. Zunächst wird der nichtflüchtige Speicher, z. B. über seine Adressen 64 bis 103 abgefragt, ob noch nicht verbrauchte Werteinheiten zur Verfügung stehen. Ist dies nicht der Fall, so führt dies sofort zum Abbruch des Datenaustausches. Stehen dagegen noch nicht verbrauchte Werteinheiten zur Verfügung, so ist ein nach einem Entwertungsvorgang eine Prozedur zur Echtheitserkennung durch das Rechenwerk freigegeben. Abhängig von mindestens einer in der Datenein-/ausgabeeinrichtung 2 gespeicherten Zufallsinformation R als auch einer im nichtflüchtigen Speicher gespeicherten Information EE einschließlich des geänderten Wertezählers werden dann die Kontrolldaten in der Datenträgeranordnung 1 und der Datenein-/ausgabeeinrichtung 2 berechnet. Diese Berechnung kann erfindungsgemäß in der Datenträgeranordnung schneller erfolgen als in der Datenein-/ausgabeeinrichtung 2. Die bei dieser Berechnung in der Datenträgeranordnung erzeugten Kontrolldaten sind in FIG 2 mit K1 und die in der Datenein-/ausgabeeinrichtung 2 erzeugten Kontrolldaten mit K2 bezeichnet. Stimmt K1 und K2 überein, so ist die Datenträgeranordnung als echt erkannt worden und ein weiterer Datenaustausch wird ermöglicht. Stimmt dagegen K1 und K2 nicht überein, so führt dies zum Abbruch der Datenverbindung zwischen der Datenein-/ausgabeeinrichtung 2 und der Datenträgeranordnung 1. In FIG 2 ist zusätzlich noch dargestellt, daß das zur Verfügungstellen der Kontrolldaten K1 durch eine Wartezeit verzögert erfolgen kann.

## Patentansprüche

1. Verfahren zur Echtheitserkennung einer zu einem Datenaustauschsystem gehörenden und mit einer begrenzten Anzahl von Werteinheiten ausgestatteten Datenträgeranordnung (1), die eine einen nichtflüchtigen Speicher (4) zum Speichern einer aktuellen Anzahl von Werteinheiten der Datenträgeranordnung (1) und dessen Steuer- und Adressierschaltung bildende integrierte Schaltung aufweist, wobei bei dem Datenaustauschsystem mit einer Datenein-/ausgabeeinrichtung (2) Daten zur Echtheitserkennung aus der Datenträgeranordnung (1) austauschbar sind,
**dadurch gekennzeichnet,**
daß ein Datenaustausch zur Echtheitserkennung erst freigegeben wird, nachdem die aktuelle Anzahl der Werteinheiten verringert worden ist.

2. Verfahren nach Anspruch 1,
**dadurch gekennzeichnet,**
daß die aktuelle Anzahl der noch nicht verbrauchten Werteinheiten als Maßgabe zur Erzeugung einer Datensendung ("Response") von der Datenträgeranordnung (1) zur Datenein-/ausgabeeinrichtung (2) vorgesehen ist.

3. Einrichtung nach Anspruch 2,
**dadurch gekennzeichnet,**
daß sich ein Informationsinhalt der Datensendung mit einer Änderung der aktuellen Anzahl der Werteinheiten ebenfalls ändert.

4. Verfahren nach einem der Ansprüche 1 bis 3,
**dadurch gekennzeichnet,**
daß eine Datensendung ("Response") der Datenträgeranordnung (1) zur Datenein-/ausgabeeinheit (2) nur dann erfolgt, nachdem die Datenein-/ausgabeeinrichtung (2) eine vorgegebene Anzahl von Taktimpulsen zur tragbaren Datenträgeranordnung (1) gesendet hat.

5. Verfahren nach einem der Ansprüche 1 bis 4,
**dadurch gekennzeichnet,**
daß die Datensendung ("Response") von der Datenträgeranordnung (1) zur Datenein-/ausgabeeinheit (2) auf eine vorgegebene Anzahl von Takten der Datenein-/ausgabeeinrichtung (2) begrenzt wird.

6. Verfahren nach Anspruch 1,
**dadurch gekennzeichnet,**
daß die aktuelle Anzahl der noch nicht verbrauchten Werteinheiten als Maßgabe zur Erzeugung einer Datensendung ("Challenge") von der Datenein-/ausgabeeinheit (2) zur Datenträgeranordnung (1) vorgesehen wird.

7. Verfahren nach einem der Ansprüche 2 bis 5,
**dadurch gekennzeichnet,**
daß eine Datensendung ("Response") von der Datenträgeranordnung (1) zur Datenein-/ausgabeeinheit erst nach Ablauf einer vorgegebenen Anzahl von Takten gesendet wird, und daß diese Anzahl von Takten von der Datenein-/ausgabeeinheit (2) beeinflußbar ist.

8. Verfahren nach einem der Ansprüche 1 bis 7,
**dadurch gekennzeichnet,**
daß die Datenträgeranordnung (1) und/oder Datenein-/ausgabeeinrichtung (2) neben einem Datenaustausch zur Echtheitserkennung auch zusätzliche für die eigentliche Echtheitserkennung unnötige Daten austauscht,um ein Erkennen der zur eigentlichen Echtheitserkennung notwendigen Daten zu erschweren.

9. Verfahren nach einem der Ansprüche 1 bis 8,
**dadurch gekennzeichnet,**
daß nach einem Einschreiben von Daten in einen vorgegebenen Teilbereich des nichtflüchtigen Speichers (4) eine Datensendung ("Response") von der Datenträgeranordnung (1) zur Datenein-/ausgabeeinheit (2) erfolgt.

10. Verfahren nach einem der Ansprüche 1 bis 9,
**dadurch gekennzeichnet,**
daß erst nach einem Löschen eines vorgegebenen Teilbereiches des nichtflüchtigen Speichers (4) zum Speichern der Anzahl von Werteinheiten eine Datensendung ("Response") von der Datenträgeranordnung (1) zur Datenein-/ausgabeeinheit (2) erfolgt.

11. Verfahren nach einem der Ansprüche 1 bis 10,
**dadurch gekennzeichnet,**
daß eine Datensendung ("Response") von der Datenträgeranordnung (1) zur Datenein-/ausgabeeinrichtung (2) mittels eines eine rückgekoppelte Schieberegistereinrichtung enthaltenen digitalen Rechenwerkes durchgeführt wird.

12. Verfahren nach Anspruch 11,
**dadurch gekennzeichnet,**
daß das digitale Rechenwerk eine nichtlineare Funktion realisiert, die die Ausgabe der Datensendung ("Response") von der Datenträgeranordnung (1) zur Datenein-/ausgabeeinheit (2) beeinflußt.

13. Datenträgeranordnung (1) zur Durchführung eines Verfahrens nach einem der Ansprüche 1 bis 12 mit einer einen nichtflüchtigen Speicher (4) zum Speichern einer aktuellen Anzahl von Werteinheiten und dessen Steuer- und Adressierschaltung bildenden integrierten Schaltungsanordnung, wobei mittels einer Datenein-/ausgabeeinrichtung (2) Daten zur Echtheitserkennung aus der Datenträgeranordnung (1) lesbar bzw. in diese einschreibbar sind,
**dadurch gekennzeichnet,**
daß die Datenträgeranordnung (1) eine Koppeleinrichtung (7) aufweist, die derart ausgebildet ist, daß ein Datenaustausch zur Echtheitserkennung erst freigegeben wird, nachdem die aktuelle Anzahl der Werteinheiten verringert worden ist.

14. Datenträgeranordnung nach Anspruch 13,
**dadurch gekennzeichnet,**
daß die Koppeleinrichtung (7) der Datenträgeranordnung (1) ein digitales Rechenwerk mit einer rückgekoppelten Schieberegistereinrichtung aufweist, und daß die rückgekoppelte Schieberegistereinrichtung mit einem der aktuellen Anzahl der noch nicht verbrauchten Werteinheiten zugeordneten Informationssignal zur Erzeugung einer Pseudozufallsfolge ladbar ist.

15. Datenträgeranordnung nach Anspruch 13 oder 14,
**dadurch gekennzeichnet,**
daß das digitale Rechenwerk als integrierte Schaltung ausgeführt ist und über eine Fotomaskenanordnung so verschaltet ist, daß elektrische Leitungsverbindungen optisch nicht sichtbar durch Dotierungsprozesse hergestellt sind.

16. Datenträgeranordnung nach einem der Ansprüche 13 bis 15,
**dadurch gekennzeichnet,**
daß die integrierte Schaltung mit zusätzlichen Schaltungselementen versehen ist, die für die eigentliche integrierte Schaltung nicht gebraucht werden.

17. Datenträgeranordnung nach einem der Ansprüche 13 bis 16,
**dadurch gekennzeichnet,**
daß mindestens das digitale Rechenwerk in der integrierten Schaltung mit Schichten aus Metall- und/oder Silizium geschützt gegen optische Analyse und gegen Messung elektrischer Potentiale abgedeckt ausgebildet ist.

18. Datenträgeranordnung nach einem der Ansprüche 13 bis 17,
**dadurch gekennzeichnet,**
daß in der Datenein-/ausgabeeinrichtung (2) Mittel vorgesehen sind, Vergleichswerte zur Information der von der Datenträgeranordnung gesendeten Datensendung ("Response") zu berechnen, und daß durch diese Mittel eine langsamere Berechnung in der Datenträgeranordnung (1) ermöglicht ist und die "Response" des Datenträgers in der Datenein-/ausgabeeinrichtung bis zum Datenverleich zwischenspeicherbar ist.

19. Datenträgeranordnung nach einem der Ansprüche 13 bis 18,
**dadurch gekennzeichnet,**
daß die Datenträgeranordnung eine tragbare Datenträgeranordnung, insbesondere eine Chipkarte ist.

## Claims

1. Method for checking the authenticity of a data carrier arrangement (1) which is associated with a data exchange system, is equipped with a limited number of value units and has a non-volatile memory (4) for storing a current number of value units of the data carrier arrangement (1) and whose [lacuna] has an integrated circuit which forms its control and address circuit, it being possible, in the data exchange system, for data for authenticity checking from the data carrier arrangement (1) to be exchanged with a data input/output device (2), characterized in that a data exchange for authenticity checking cannot be enabled until the current number of value units has been reduced.

2. Method according to Claim 1, characterized in that the current number of value units which have not yet been consumed is provided as a measure in order to generate a data transmission ("fed-back") from the data carrier arrangement (1) to the data input/output device (2).

3. Device according to Claim 2, characterized in that, when the current number of value units is changed, an information content of the data transmission is likewise changed.

4. Method according to one of Claims 1 to 3, characterized in that a data transmission ("response") from the data carrier arrangement (1) to the data input/output unit (2) does not take place until the data input/output device (2) has transmitted a prescribed number of clock pulses to the portable data carrier arrangement (1).

5. Method according to one of Claims 1 to 4, characterized in that the data transmission ("response") from the data carrier arrangement (1) to the data input/output unit (2) is limited to a prescribed number of clock pulses of the data input/output device (2).

6. Method according to Claim 1, characterized in that the current number of value units which have not yet been consumed is provided as a measure for the generation of a data transmission ("challenge") from the data input/output unit (2) to the data carrier arrangement (1).

7. Method according to one of Claims 2 to 5, characterized in that a data transmission ("response") from the data carrier arrangement (1) to the data input/output unit does not take place until a prescribed number of clock pulses has elapsed, and in that this number of clock pulses can be influenced by the data input/output unit (2).

8. Method according to one of Claims 1 to 7, characterized in that, in addition to a data exchange for authenticity checking, the data carrier arrangement (1) and/or data input/output device (2) also exchanges additional data which is not necessary for the actual authenticity checking, in order to make it more difficult to detect the data which are necessary for the actual authenticity checking.

9. Method according to one of Claims 1 to 8, characterized in that, after data have been input into a prescribed part of the non-volatile memory (4), a data transmission ("response") from the data carrier arrangement (1) to the data input/output unit (2) takes place.

10. Method according to one of Claims 1 to 9, characterized in that a data transmission ("response") from the data carrier arrangement (1) to the data input/output unit (2) does not take place until after a prescribed part of the non-volatile memory (4) has been cleared in order to store the number of value units.

11. Method according to one of Claims 1 to 10, characterized in that a data transmission ("response") from the data carrier arrangement (1) to the data input/output device (2) is carried out by means of a digital arithmetic unit which contains a fed-back shift register device.

12. Method according to Claim 11, characterized in that the digital arithmetic unit executes a non-linear function which influences the outputting of the data transmission ("response") from the data carrier arrangement (1) to the data input/output unit (2).

13. Data carrier arrangement (1) for carrying out a method according to one of Claims 1 to 12 having an integrated circuit arrangement which forms a non-volatile memory (4) for storing a current number of value units and its control and address circuit, it being possible to output from the data carrier arrangement (1), and/or input into it, data for authenticity checking by means of a data input/output device (2), characterized in that the data carrier arrangement (1) has a coupling device (7) which is designed in such a way that a data exchange for authenticity checking is not enabled until the current number of value units has been reduced.

14. Data carrier arrangement according to Claim 13, characterized in that the coupling device (7) of the data carrier arrangement (1) has a digital arithmetic unit with a fed-back shift register device, and that the fed-back shift register device can be loaded with one of the current number of information signal associated with the not yet used value units in order to generate a pseudorandom sequence.

15. Data carrier arrangement according to Claim 13 or 14, characterized in that the digital arithmetic unit is embodied as an integrated circuit and is wired via a photomask arrangement in such a way that electrical line connections are produced by means of doping processes in an invisible fashion.

16. Data carrier arrangement according to one of Claims 13 to 15, characterized in that the integrated circuit is provided with additional circuit elements which are not used for the actual integrated circuit.

17. Data carrier arrangement according to one of Claims 13 to 16, characterized in that at least the digital arithmetic unit in the integrated circuit is designed covered with layers made of metal and/or silicon protected against optical analysis and against measurement of electrical potentials.

18. Data carrier arrangement according to one of Claims 13 to 17, characterized in that provided in the data input/output device (2) are means for calculating comparison values relating to the information in the data transmission ("response") transmitted by the data carrier arrangement, and in that these means make it possible to carry out slower calculation in the data carrier arrangement (1) and to buffer the "response" of the data carrier in the data input/output device until the data reconciliation.

19. Data carrier arrangement according to one of Claims 13 to 18, characterized in that the data carrier arrangement is a portable data carrier arrangement, in particular a chipcard.

## Revendications

1. Procédé de vérification de l'authenticité d'un agencement de support de données (1), qui fait partie d'un système d'échange de données, est doté d'un nombre limité d'unités de valeurs, et comporte un circuit intégré formant d'une part une mémoire (4) non volatile destinée à mémoriser un nombre actuel d'unités de valeurs de l'agencement de support de données (1), et d'autre part le circuit de commande et d'adressage de cette mémoire, des données de l'agencement de support de données (1) pouvant être échangées, en vue de la vérification de l'authenticité, à l'aide d'un dispositif d'entrée et de sortie de données (2) dans le système d'échange de données, **caractérisé** en ce qu'un échange de données pour la vérification de l'authenticité n'est validé qu'après réduction du nombre actuel des unités de valeurs.

2. Procédé selon la revendication 1, **caractérisé** en ce que le nombre actuel des unités de valeurs encore non utilisées est prévu en tant que caractéristique pour produire une émission de données (réponse) de l'agencement de support de données (1) vers le dispositif d'entrée et de sortie de données (2).

3. Procédé selon la revendication 2, **caractérisé** en ce qu'un contenu d'information de l'émission de données est également modifié avec la modification du nombre actuel d'unités de valeurs.

4. Procédé selon l'une des revendications 1 à 3, **caractérisé** en ce qu'une émission de données (réponse) de l'agencement de support de données (1) vers le dispositif d'entrée et de sortie de données (2) ne s'effectue qu'après l'émission, par le dispositif d'entrée et de sortie de données (2), d'un nombre prescrit d'impulsions de cycle, vers l'agencement de support de données (1).

5. Procédé selon l'une des revendications 1 à 4, **caractérisé** en ce que l'émission de données (réponse) de l'agencement de support de données (1) vers le dispositif d'entrée et de sortie de données (2), est limitée à un nombre prescrit de cycles du dispositif d'entrée et de sortie de données (2).

6. Procédé selon la revendication 1, **caractérisé** en ce que le nombre actuel des unités de valeurs encore non utilisées est prévu en tant que caractéristique pour produire une émission de données (question) de l'unité d'entrée et de sortie de données (2) vers l'agencement de support de données (1).

7. Procédé selon l'une des revendications 2 à 5, **caractérisé** en ce qu'une émission de données (réponse) de l'agencement de support de données (1) vers l'unité d'entrée et de sortie de données, n'est émise qu'après le déroulement d'un nombre prescrit de cycles, et en ce que ce nombre de cycles peut être influencé par l'unité d'entrée et de sortie de données (2).

8. Procédé selon l'une des revendications 1 à 7, **caractérisé** en ce que l'agencement de support de données (1) et/ou le dispositif d'entrée et de sortie de données (2), en-dehors d'un échange de données pour la vérification d'authenticité, échangent également des données supplémentaires inutiles pour la vérification d'authenticité proprement dite, en vue de compliquer la reconnaissance des données nécessaires à la vérification d'authenticité proprement dite.

9. Procédé selon l'une des revendications 1 à 8, **caractérisé** en ce qu'après une écriture de données dans une zone partielle de la mémoire non volatile (4), on effectue une émission de données (réponse) de l'agencement de support de données (1) vers l'unité d'entrée et de sortie de données (2).

10. Procédé selon l'une des revendications 1 à 9, **caractérisé** en ce que c'est seulement après l'effacement d'une zone partielle de la mémoire (4) non volatile pour la mémorisation du nombre des unités de valeurs, qu'est effectuée une émission de données (réponse) de l'agencement de support de données (1) vers l'unité d'entrée et de sortie de données (2).

11. Procédé selon l'une des revendications 1 à 10, **caractérisé** en ce qu'une émission de données (réponse) de l'agencement de support de données (1) vers l'unité d'entrée et de sortie de données (2), est effectuée au moyen d'une unité de calcul numérique renfermant un dispositif de registre à décalage à réaction.

12. Procédé selon la revendication 11, **caractérisé** en ce l'unité de calcul numérique réalise une fonction non linéaire qui influence la délivrance de l'émission de données (réponse) de l'agencement de support de données (1) vers l'unité d'entrée et de sortie de données (2).

13. Agencement de support de données (1) destiné à la mise en oeuvre d'un procédé selon l'une des revendications 1 à 12, comprenant un agencement de circuit intégré qui forme d'une part une mémoire (4) non volatile destinée à mémoriser un nombre actuel d'unités de valeurs, et d'autre part le circuit de commande et d'adressage de cette mémoire, des données pouvant être lues ou écrites dans l'agencement de support de données (1) au moyen d'un dispositif d'entrée et de sortie de données (2), en vue de la vérification de l'authenticité, **caractérisé** en ce que l'agencement de support de données (1) présente un dispositif de couplage (7) qui est conçu de façon telle qu'un échange de données pour la vérification d'authenticité n'est validé qu'après réduction du nombre actuel des unités de valeurs.

14. Agencement de support de données selon la revendication 13, caractérisé en ce que le dispositif de couplage (7) de l'agencement de support de données (1) présente une unité de calcul numérique comprenant un dispositif de registre à décalage à réaction, et en ce que le dispositif de registre à décalage à réaction peut être chargé par un signal d'information associé au nombre actuel des unités de valeurs non encore utilisées, pour élaborer une pseudo-suite aléatoire.

15. Agencement de support de données selon la revendication 13 ou 14, **caractérisé** en ce que l'unité de calcul numérique est réalisée sous forme de circuit intégré, et est connectée par l'intermédiaire d'un agencement de masque photo, de façon telle que les lignes de connexion électriques soient réalisées de manière invisible sur le plan optique, par des processus de dopage.

16. Agencement de support de données selon l'une des revendications 13 à 15, **caractérisé** en ce que le circuit intégré est muni de composants de circuit supplémentaires, qui ne sont pas utiles au circuit intégré proprement dit.

17. Agencement de support de données selon l'une des revendications 13 à 16, **caractérisé** en ce qu'au moins l'unité de calcul numérique dans le circuit intégré, est recouverte de couches en métal et/ou silicium en étant ainsi protégée à l'encontre d'une analyse optique et à l'encontre de la mesure de potentiels électriques.

18. Agencement de support de données selon l'une des revendications 13 à 17, **caractérisé** en ce que dans le dispositif d'entrée et de sortie de données (2) sont prévus des moyens permettant de calculer des valeurs de comparaison, pour information, de l'émission de données (réponse) émise par l'agencement de support de données, et en ce que ces moyens permettent un calcul plus lent dans l'agencement de support de données (1) et la réponse du support de données peut être mémorisée de façon intermédiaire dans le dispositif d'entrée et de sortie de données jusqu'à la comparaison des données.

19. Agencement de support de données selon l'une des revendications 13 à 18, **caractérisé** en ce que l'agencement de support de données est un agencement de support de données portable, notamment une carte à puce.
